# FASCICULE DE BREVET EUROPEEN

(11) **EP 4 174 613 B1**
(45) Date de publication et mention de la délivrance du brevet: **25.12.2024**
(21) Numéro de dépôt: 21306484.3
(22) Date de dépôt: 26.10.2021
(51) Int. Cl.: G05D 1/00, G08G 5/00

(54) **PROCEDE ET SYSTEME DE GESTION D'AUTONOMIE POUR UNE FLOTTE DE VEHICULES ALIMENTEE PAR BATTERIE**
VERFAHREN UND SYSTEM ZUR AUTONOMIESTEUERUNG FÜR EINE BATTERIEBETRIEBENE FAHRZEUGSFLOTTE
METHOD AND SYSTEM FOR MANAGING THE AUTONOMY OF A FLEET OF BATTERY-OPERATED VEHICLES

(43) Date de publication de la demande: 03.05.2023
(73) Titulaire: Bull SAS, 78340 Les Clayes-sous-Bois (FR)
(72) Inventeur: PIGEON, Didier, 95870 BEZONS (FR)
(74) Mandataire: IPAZ

(56) Documents cités:
- CN-A- 110 794 873
- GALKIN BORIS ET AL: "UAVs as Mobile Infrastructure: Addressing Battery Lifetime", IEEE COMMUNICATIONS MAGAZINE, IEEE SERVICE CENTER, PISCATAWAY, US, vol. 57, no. 6, 2 June 2019 (2019-06-02), pages 132 - 137, XP011730536, ISSN: 0163-6804, [retrieved on 20190618], DOI: 10.1109/MCOM.2019.1800545
- BOUKOBERINE MOHAMED NADIR ET AL: "A critical review on unmanned aerial vehicles power supply and energy management: Solutions, strategies, and prospects", APPLIED ENERGY, ELSEVIER SCIENCE PUBLISHERS, GB, vol. 255, 12 September 2019 (2019-09-12), XP085862413, ISSN: 0306-2619, [retrieved on 20190912], DOI: 10.1016/J.APENERGY.2019.113823

## Description

La présente invention concerne un procédé de gestion d'autonomie pour une flotte de véhicules alimentés chacun par au moins une batterie embarquée. Elle concerne également un système mettant en oeuvre un tel procédé.

Le domaine de l'invention est le domaine de la gestion de l'autonomie d'une flotte de véhicules alimentés sur batterie, en particulier lors de la réalisation d'une mission impliquant plusieurs desdits véhicule formant un groupe de véhicules, également appelé « matrice ».

### État de la technique

Les domaines industriels, publics et privés, pour qui l'utilisation de drônes est capable de rendre des services, s'envisage aisément et ne feront que s'acroître. Les applications concrètes sont cependant encore limitées dans leur mise en oeuvre en matière de durée d'utilisation ou de rayon d'action. La principale raison étant le manque d'autonomie du drône en rapport avec la puissance à fournir pour durablement embarquer un équipement permettant d'acomplir une mission. Ce problème se pose pour les drônes, mais aussi de manière générale, pour tout véhicule alimenté par une batterie embarquée et pour lequel le problème de l'autonomie se pose.

Ce problème de l'autonomie énergétique se pose encore plus lorsqu'une mission doit être exécuté par plusieurs véhicules, c'est-à-dire par un groupe de plusieurs véhicules, également appelé « matrice » de véhicules, tel qu'une mission de surveillance d'une zone par plusieurs drônes par exemple, ou lors du transport d'une charge, etc.

On connait des solutions de recharge rapide, ou de remplacement à la volée, d'une batterie d'un véhiucle. Or, ces solutions se concentrent sur la gestion de l'autonomie de chaque véhicule considéré de manière individuelle et indépendate des autres véhicules. Ces solutions, ne permettent pas la gestion de l'autonomie d'une matrice de plusieurs véhicules lorsque ladite matrice réalise une mission.

Il est connu de l'article "UAVs as Mobile Infrastructure: Addressing Battery Lifetime" un procédé de gestion d'une flotte de plusieurs drones alimentés par batterie et assurant la continuité d'un relais de réseau de communication, le procédé comprenant la surveillance de l'état de charge des drones et le remplacement d'un des drones par un autre drone au niveau d'une station de recharge.

Il est également connu de CN 110 794 873 A, la gestion d'un groupe de micro-drones qui effectuent une tâche d'inspection de ligne électrique, le procédé prévoyant qu'un drone de rechange prenne le relais d'un des drones d'inspection lorsque le niveau de batterie de ce drone est faible.

Un but de la présente invention est de remédier à au moins un des inconvénients précités.

Un autre but de la présente invention est de proposer une solution de gestion de l'autonomie d'une matrice de plusieurs véhicules lors de la réalisation d'une mission par ladite matrice de véhicules.

Un autre but de la présente invention est de proposer une solution de gestion de l'autonomie d'une matrice de plusieurs véhicules lors de la réalisation d'une mission par ladite matrice de véhicules, tout en permettant une continuité de mission.

### Exposé de l'invention

L'invention permet d'atteindre au moins l'un de ces buts par un procédé de gestion d'autonomie d'une matrice de plusieurs véhicules au sein d'une flotte de véhicules, chacun alimenté par au moins une batterie embarquée, lors de la réalisation d'une mission par ladite matrice, ledit procédé comprenant les étapes suivantes réalisées pour chaque véhicule de ladite matrice participant à ladite mission :
- surveillance de l'autonomie dudit véhicule, et
- lorsque l'autonomie dudit véhicule atteint un seuil, dit de clonage, clonage dudit véhicule, par un autre véhicule, dit véhicule clone, parmi les autres véhicules de ladite flotte, au niveau d'une station, dite de clonage.

Ainsi, le procédé selon l'invention propose de gérer l'autonomie d'une matrice de plusieurs véhicules accomplissant une mission, et non pas de chaque véhicule en le considérant individuellement et indépendamment des autres véhicules de la matrice, et indépendamment de la mission accomplie par la matrice. L'invention propose de gérer l'autonomie de la matrice de véhicules en remplaçant chaque véhicule dont l'autonomie devient insuffisante par un autre véhicule de plus grande autonomie et qui peut accomplir la même fonction que celle de ce véhicule. Ainsi, les autres véhicules de la matrice peuvent continuer la mission et n'ont pas à être arrêtés. De plus, chaque véhicule dont l'autonomie diminue est immédiatement remplacé par un véhicule identique de sorte que la mission est assurée avec très peu de, ou sans, discontinuité.

Dans la suite, on appelle « zone de mission », une zone géographique dans laquelle les véhicules de la matrice accomplissent la mission. Cette zone de mission peut être une zone fixe, ou une zone variable en fonction de la mission. Par exemple, la zone de mission peut évoluer suivant une trajectoire prédéfinie. Suivant un autre exemple, la zone de mission peut être un espace délimité, telle qu'une piste d'atterrissage, un lieu public, etc.

Par exemple, une mission accomplie par une matrice de véhicules peut être :
- une mission de surveillance d'une zone géographique, tel qu'une piste d'atterrissage ou un parc ou encore un espace de manifestation, etc. Par exemple, dans ce cas, la zone de mission correspond à ladite zone géographique surveillée ;
- une mission de transport de charge. Par exemple, dans ce cas, la zone de mission peut-être une zone géographique qui change suivant une trajectoire de transport ;
- une mission de communication, tel que par exemple la création d'un réseau de communication. Dans ce cas, la zone de mission peut être soit fixe, soit variable en fonction du réseau de communication souhaité ;
- une mission de transport de personnes. Dans ce cas, l'invention proposé offre à des loueurs de véhicules électriques, une solution de continuité de parcours sans délais de recharge, la personne transportée n'ayant qu'à transférer ses baguages vers le véhicule clone avant de poursuivre son trajet ;
- etc.

Au moins un véhicule peut être un véhicule terrestre, un véhicule aérien, véhicule marin, alimenté par batterie.

En particulier, au moins un véhicule peut être un drone volant alimenté par au moins une batterie électrique embarquée.

Le véhicule peut être muni d'au moins un organe spécifique à la mission à accomplir, tel que par exemple une caméra, une antenne relais, etc.

Suivant des modes de réalisation, pour au moins un véhicule de la matrice, le seuil de clonage peut être déterminé en fonction d'au moins un des paramètres suivants :
- d'une trajectoire dudit véhicule à cloner,
- d'une donnée de localisation dudit véhicule à cloner, et
- d'une donnée de localisation des stations de clonage ;
de sorte que ledit seuil de clonage est au moins égale à la distance entre la position actuelle dudit véhicule et la plus proche station de clonage.

Ainsi, le procédé selon l'invention permet de s'assurer que si le niveau d'autonomie du véhicule atteint le seuil de clonage, alors il est toujours possible que ledit véhicule rallie une station de clonage.

Dans ce cas, le seuil de clonage est changeant et s'adapte en permanence à la position actuelle du véhicule lors de la réalisation de la mission par la matrice.

Suivant des modes de réalisation, pour au moins un véhicule de la matrice, le seuil de clonage peut être fixe.

Dans ce cas, le seuil de clonage peut être choisie de sorte à couvrir la plus grande distance entre deux stations de clonage dans la zone de mission. Par exemple, lorsque la zone de mission est fixe, le seuil de clonage peut être déterminé comme étant l'autonomie nécessaire à parcourir la distance entre deux stations de recharge adjacentes les plus éloignées. Suivant un autre exemple, lorsque la zone de mission est changeante suivant une trajectoire, le seuil de clonage peut être déterminé comme étant l'autonomie nécessaire à parcourir la distance entre deux stations de recharge adjacentes les plus éloignées, le long ladite trajectoire.

Ainsi, le procédé selon l'invention permet de s'assurer que si le niveau d'autonomie dudit véhicule atteint le seuil de clonage, alors il est toujours possible de cloner ledit véhicule par une station de clonage.

Suivant une caractéristique avantageuse, l'étape de clonage peut comprendre une étape de détermination d'un véhicule clone, parmi au moins un véhicule présent au niveau de la station de clonage, en fonction d'au moins des paramètres suivants :
- un niveau d'autonomie de chaque véhicule présent au niveau de ladite station de clonage. Par exemple, il peut être utile de choisir le véhicule dont l'autonomie est la plus grande. Suivant un autre exemple, il peut être souhaitable de sélectionner un véhicule qui présente une autonomie suffisante pour terminer la mission, sans nécessairement choisir le véhicule présentant la plus grande autonomie ;
- un type de chaque véhicule présent au niveau de ladite station de clonage. Par exemple, lorsque le véhicule à cloner est un drone volant présentant certaines spécifications techniques, il peut être utile de choisir un véhicule clone présentant les mêmes spécifications techniques, ou du moins des spécifications techniques les plus proches ;
- un équipement de chaque véhicule présent au niveau de ladite station de clonage. Par exemple, lorsque le véhicule à cloner réalise une mission de surveillance par caméra, respectivement un réseau de téléphonie mobile, le véhicule clone doit être équipé d'une caméra, respectivement d'une antenne relais de communication.

Selon l'invention, lors de l'étape de clonage d'un véhicule à cloner, le véhicule clone peut quitter la station de clonage après que, ou au moment où, le véhicule à cloner arrive à ladite station de clonage.

Dans ce cas, le clonage est réalisé en s'assurant que le véhicule à cloner est arrivé sur la station. Cela permet de s'assurer que ce véhicule à cloner doit bien être cloné auprès de cette station de clonage, ce qui réduit les erreurs de clonage.

Selon l'invention, lors de l'étape de clonage d'un véhicule à cloner, la mission du véhicule à cloner peut être partiellement ou totalement, en particulier temporairement, reprise par un autre véhicule de la matrice.

Cet autre véhicule de la matrice peut être un autre véhicule de la matrice participant à la mission. Par exemple, dans le cadre d'une mission de transport, un des véhicules de la matrice peut augmenter sa puissance de transport pour parer à l'absence du véhicule à cloner lors de l'étape de clonage. Suivant un autre exemple, dans le cadre d'une mission de réseau de communication, un des véhicules de la matrice peut augmenter sa puissance d'émission/réception de signaux pour parer à l'absence du véhicule à cloner lors de l'étape de clonage.

Le procédé selon l'invention peut comprendre une étape de recharge du véhicule cloné au niveau de la station de clonage.

La station de clonage peut être munie d'une borne de charge, filaire ou sans fil, pour recharger le véhicule cloné. Cela permet de rendre ce véhicule disponible comme véhicule clone pour un autre véhicule à cloner, pour cette mission ou pour une prochaine mission.

Suivant un autre aspect de la présente invention, il est proposé un système comprenant :
- une flotte de véhicules, chacun alimenté par batterie électrique embarquée, et configurés pour réaliser au moins une mission sous forme d'au moins une matrice comprenant plusieurs véhicules de ladite flotte ; et
- au moins une station de clonage ;
configurés pour mettre en oeuvre le procédé selon l'invention.

En particulier, le système selon l'invention peut comprendre, en termes de moyens technique ou de configuration, une combinaison quelconque d'au moins une des caractéristiques optionnelles décrites plus haut en référence au procédé selon l'invention, et qui ne sont pas reprises ici par soucis de concision.

En particulier, au moins une station de clonage peut comprendre une borne de recharge d'un véhicule cloné.

Au moins un, en particulier chaque, station de clonage peut comprendre au moins un module de communication radio avec chaque véhicule de la matrice, et de préférence avec chaque véhicule de la flotte.

Au moins un, en particulier chaque station de clonage peut comprendre, une unité de gestion pour identifier un véhicule clone en fonction d'une requête de clonage reçue de la part d'un véhicule à cloner. Cette unité de gestion peut être configurée pour sélectionner le véhicule clone en fonction d'au moins un des paramètres suivants :
- un niveau d'autonomie de chaque véhicule présent au niveau de ladite station de clonage ;
- un type de chaque véhicule présent au niveau de ladite station de clonage, et un type de véhicule cloner ;
- un équipement de chaque véhicule présent au niveau de ladite station de clonage, et un équipement utilisé par le véhicule cloné lors de sa mission.

Au moins un, en particulier chaque, véhicule peut comprendre au moins un module de communication radio avec la ou chaque station de clonage.

Au moins un, en particulier chaque, véhicule peut comprendre au moins un module de mesure de son niveau d'autonomie. Un tel module de mesure peut réaliser une mesure d'une charge restante d'une batterie électrique alimentant ledit véhicule. L'autonomie restante peut correspondre au niveau de charge de la batterie, ou une distance que le véhicule peut parcourir en participant à la mission de la matrice, etc.

Au moins un, en particulier chaque, véhicule peut comprendre au moins un module de communication, en particulier pour émettre une requête de clonage vers une station de clonage.

Par exemple, le véhicule peut mesurer son autonomie et le comparer à un seuil de clonage. Lorsque l'autonomie diminue et atteint le seuil de clonage, le véhicule peut, voire doit, émettre une requête clonage à la station la plus proche, et en particulier la station la plus proche à venir suivant sa trajectoire lors de la réalisation de la mission.

Alternativement, chaque véhicule émet en permanence son niveau de batterie vers une unité centrale, éventuellement avec une donnée de localisation et/ou une donnée de trajectoire. Dans ce cas, c'est cette unité centrale qui réalise la comparaison du niveau de charge de chaque véhicule au seuil de clonage et décide du clonage ou non de chaque véhicule, éventuellement en fonction de la localisation de la station de clonage la plus proche.

### Description des figures et modes de réalisation

D'autres avantages et caractéristiques apparaîtront à l'examen de la description détaillée d'un mode de réalisation nullement limitatif, et des dessins annexés sur lesquels :
- la FIGURE 1 est une représentation schématique d'un exemple de réalisation non limitatif d'un procédé selon l'invention ;
- la FIGURE 2 est une représentation schématique d'un exemple de réalisation non limitatif d'un véhicule pouvant être mis en oeuvre dans la présente invention ;
- la FIGURE 3 est une représentation schématique d'un exemple de réalisation non limitatif d'une station de clonage pouvant être mise en oeuvre dans la présente invention ; et
- les FIGURES 4a-4c sont des représentations schématiques d'un exemple de réalisation non limitatif d'un système selon l'invention ;

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à de l'état de la technique antérieure. Cette sélection comprend au moins une caractéristique de préférence fonctionnelle sans détails structurels, ou avec seulement une partie des détails structurels si cette partie est uniquement suffisante pour conférer un avantage technique ou pour différencier l'invention par rapport à l'état de la technique antérieure.

Sur les figures les éléments communs à plusieurs FIGURES conservent la même référence.

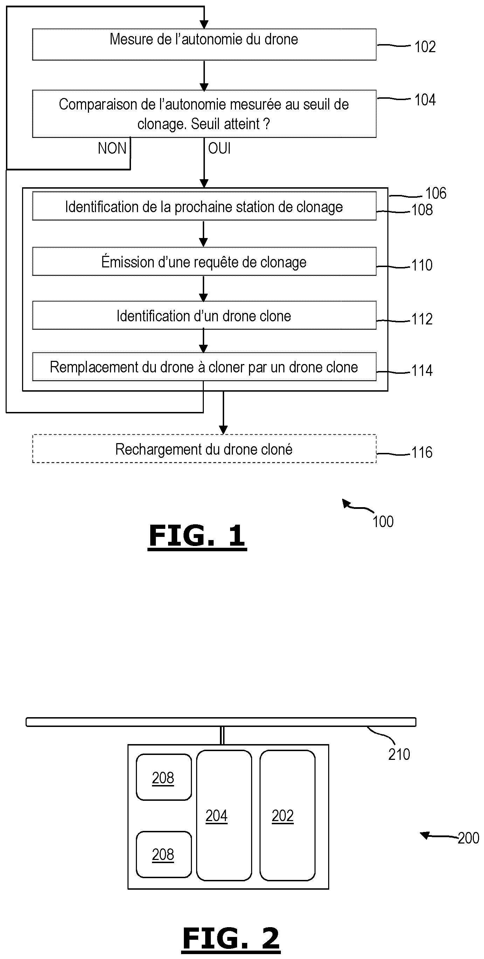

La FIGURE 1 est une représentation schématique d'un exemple de réalisation non limitatif d'un procédé selon l'invention.

Le procédé 100 peut être utilisé pour gérer l'autonomie d'une matrice de véhicules, choisie dans une flotte de véhicules, et réalisant une mission dans une zone de mission.

En particulier, et sans perte de généralité, on considère que la matrice de véhicules est une matrice de drones volant et la mission accomplie est la surveillance d'une piste d'atterrissage suivant une trajectoire donnée.

La matrice est par exemple composée d'une dizaine de drones comportant chacun une caméra.

Chaque drone est équipée d'une batterie embarquée rechargeable dont le niveau de charge définit une autonomie en fonction d'une distance de vol que le drone est capable de parcourir avec la charge restante dans la batterie. Autrement dit, plus la charge de la batterie diminue plus l'autonomie diminue.

La matrice de drones se déplace suivant une trajectoire de vol le long de la piste d'atterrissage, en particulier à une vitesse constante.

Pour chaque drone est indiqué un seuil de clonage correspondant à une distance donnée. Cette distance correspond à la plus grande distance entre deux stations de clonage suivant la trajectoire de vol. Ainsi, lorsque l'autonomie d'un drone atteint le seuil de clonage juste après une station de clonage, il sera possible de le cloner au niveau de la station de clonage suivante, sans arrêter la mission de surveillance. Ainsi, le seuil de clonage est identique pour chaque drone.

Alternativement, le seuil de clonage peut être variable pour chaque drone.

Le procédé 100 est réalisé pour chaque drone de la matrice, individuellement, en parallèle ou à tour de rôle.

Le procédé 100 comprend une étape 102 de mesure de l'autonomie du drone, par exemple par un module équipant ledit drone.

Lors d'une étape 104, l'autonomie du drone est comparée au seuil de clonage associé à ce drone.

Les étapes 102 et 104 sont réalisées au sein de chaque drone par exemple par un module prévu à cet effet.

Si l'autonomie mesuré à l'étape 102 est supérieure au seuil de clonage, le procédé 100 est terminé, ou peut être répétée à nouveau à partir de l'étape 102. Dans le cas contraire, c'est-à-dire que si l'autonomie mesurée à l'étape 102 est inférieure ou égale au seuil de clonage, une étape 106 de clonage est réalisée.

L'étape de clonage 106 comprend une étape 108 d'identification de la prochaine station de clonage. Pour ce faire, le drone mémorise une liste des stations de clonage, leurs positions géographiques, et peut en fonction de sa position actuelle et de sa trajectoire, identifier la prochaine station de clonage.

L'étape de clonage 106 comprend une étape 110 d'émission d'une requête de clonage du drone dont l'autonomie a atteint le seuil de clonage, à la prochaine station de clonage identifiée lors de l'étape 108. La requête de clonage comprend un identifiant du drone à cloner, et éventuellement des données relatives à des équipements nécessaires pour participer à la mission réalisée par la matrice.

L'étape de clonage 106 comprend une étape 112 d'identification, par la station de clonage qui a reçu la requête de clonage, d'un drone clone pour remplacer le drone à cloner. Cette identification peut être réalisée en fonction d'une combinaison quelconque d'au moins une des données suivantes :
- au moins une donnée relative aux drones présents à ladite station de clonage,
- au moins une donnée relative au drone à cloner, et
- éventuellement, au moins une donnée relative à la mission à accomplir.
En particulier, l'identification du drone clone peut être réalisée en fonction :
- d'un niveau d'autonomie de chaque drone présent au niveau de la station de clonage. Par exemple, le drone clone est celui dont l'autonomie est la plus grande ;
- un type de chaque drone présent au niveau de ladite station de clonage, à savoir que le drone clone doit être un drone volant ;
- un équipement de chaque drone présent au niveau de ladite station de clonage, à savoir que le drone clone doit être équipé d'au moins une caméra de surveillance comme le drone à cloner.
Bien entendu, il est possible d'utiliser d'autre données que celles listées ci-dessus à titre d'exemple non limitatif et sans perte de généralité, à la place de ces données, ou en combinaison avec au moins l'une de ces données.
Ainsi, l'étape 112 identifie le drone clone qui va remplacer le drone à cloner.

Lors d'une étape 114, le drone à cloner est remplacé par le drone clone dans la matrice.

Selon l'invention, le drone à cloner quitte la matrice avant que le drone clone rejoigne la matrice, ou bien avant que le drone clone quitte la station de clonage. Dans ce cas, la mission du drone à cloner peut être assurée, de manière temporaire, par un autre drone de la matrice, cet autre drone pouvant être un drone suiveur ou un drone participant à la mission de la matrice.

Lors d'une étape optionnelle 116 du procédé 100 le drone cloné se retrouve sur la station de clonage. Sa batterie est rechargée par exemple par une borne de recharge sans fil équipant la station de clonage.

La FIGURE 2 est une représentation schématique d'un exemple de réalisation non limitatif d'un véhicule pouvant être mis en oeuvre dans la présente invention.

Le véhicule 200 de la FIGURE 2 peut être tout type de véhicule : un véhicule terrestre, un véhicule marin un véhicule volant, etc. Préférentiellement, le véhicule 200 est un véhicule sans conducteur. Par exemple, le véhicule 200 peut être un drone volant, une voiture, etc.

Le véhicule 200 comprend au moins une batterie embarquée 202 alimentant ledit véhicule 200. La batterie 202 est préférentiellement rechargeable, de manière filaire ou sans fil. La batterie 202 peut alternativement, ou en plus, être remplaçable, préférentiellement à la volée.

Le véhicule 200 comprend un module 204 de gestion de véhicule configuré pour :
- mesurer l'autonomie du véhicule,
- comparer l'autonomie du véhicule à un seuil de clonage prédéterminé, et
- générer une requête de clonage vers une station de clonage.
Le module de gestion de véhicule 204 peut comprendre au moins un moyen matériel, tel qu'un calculateur ou une puce électronique, et/ou au moins un moyen logiciel.

Le véhicule 200 peut en outre comprendre un module de communication 206 pour communiquer avec une station de clonage, par exemple par onde radio.

Le véhicule 200 peut en outre comprendre au moins un équipement 208 utilisé pour participer à une mission de la matrice. Un tel équipement peut comprendre une caméra, une antenne relais de téléphonie mobile, tout type de capteur tel que par exemple un capteur UV utilisé pour la surveillance de récoltes, un capteur de température, un capteur de pollution, etc.

Le véhicule 200 comprend en outre au moins un moyen 210 permettant audit véhicule de se mouvoir tel que par exemple des pales ou des roues ou encore des chenilles.

Bien entendu, le véhicule 200 peut comprendre d'autre organes que ceux décrits ici.

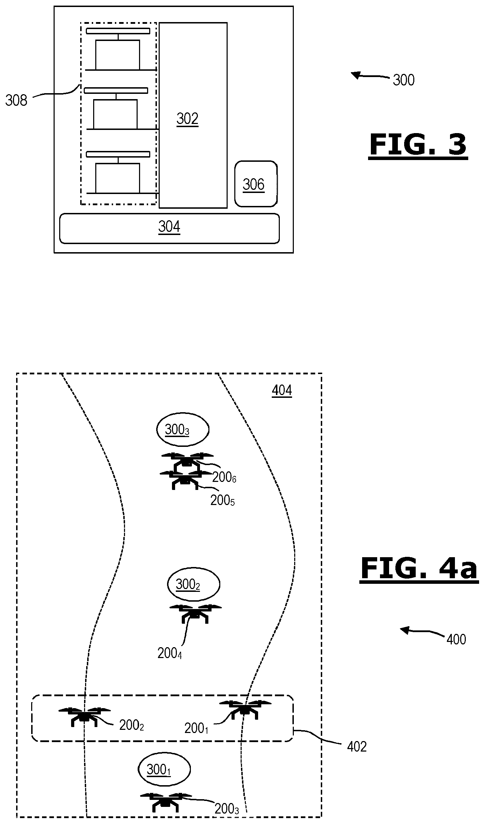

La FIGURE 3 est une représentation schématique d'un exemple de réalisation non limitatif d'une station de clonage pouvant être mise en oeuvre dans la présente invention.

La station de clonage 300 de la FIGURE 3 peut se présenter sous toute forme, tel qu'un mat ou une plateforme, etc. La station de clonage 300 est prévue dans, ou à proximité immédiate de, la zone de mission dans laquelle évolue une matrice de véhicules lors de la réalisation d'une mission.

La station de clonage 300 comprend de préférence une borne de charge 302 pour recharger la batterie d'au moins un véhicule, par exemple de manière sans fil. Une telle borne de charge 302 peut réaliser une recharge par induction par exemple.

La station 300 comprend un module 304 de gestion de station configuré pour :
- recevoir une requête de clonage de la part d'un véhicule à cloner,
- identifier un véhicule clone parmi tous les véhicules se trouvant sur ladite station de base, et
- organiser un remplacement du véhicule à cloner par le véhicule clone.
Le module de gestion de station 304 peut comprendre au moins un moyen matériel, tel qu'un calculateur ou une puce électronique, et/ou au moins un moyen logiciel.

La station 300 comprend un module de communication 306 pour communiquer, par exemple par onde radio, avec des véhicules et éventuellement avec d'autres stations de clonage.

La station 300 comprend en outre au moins une zone 308 de stockage d'un ou plusieurs véhicules pouvant être utilisés comme véhicule clone. Cette zone de stockage 308 peut être par exemple être couplée à la borne de charge 302 de sorte que la batterie de chaque véhicule stocké est rechargée pendant que ledit véhicule est stocké.

Bien entendu, la station de clonage 300 peut comprendre d'autres organes que ceux décrits ici.

Les FIGURES 4a-4c sont des représentations schématiques d'un exemple de réalisation non limitatif d'un système selon l'invention.

Le système 400 des FIGURES 4a-4c peut mettre en oeuvre un procédé selon l'invention, et en particulier le procédé 100 de la FIGURE 1.

Le système 400 comprend une flotte de plusieurs véhicules. Sur les des FIGURES 4a-4c, uniquement six véhicules 200₁-200₆ sont représentés. Bien entendu, le nombre de véhicules dans la flotte de véhicules d'un système selon l'invention n'est pas limité à six.

Dans le système 400, chaque véhicule de la flotte est un drone volant. Bien étendu, la flotte de véhicules du système selon l'invention peut comprendre d'autre type de véhicule que des drones volants, tel que par exemple des véhicules terrestres ou des véhicules marins, en plus ou à la place des drones volants.

Chaque véhicule 200₁-200₆ de la flotte du système 400 peut être identique ou similaire au véhicule 200 de la FIGURE 2.

Par ailleurs, le système 400 des FIGURES 4a-4c comprend trois stations de clonage 300₁-300₃. Bien entendu, le système 400 peut comprendre un nombre différent de stations de clonage qui peut être supérieur ou égal à 1.

Chaque station de clonage 300₁-300₃ du système 400 peut être identique ou similaire à la station de clonage 300 de la FIGURE 3.

Dans l'exemple des FIGURES 4a-4c, une matrice 402 de deux drones est prévue pour surveiller une zone à surveiller 404. Bien entendu, la matrice de véhicules peut comprendre un nombre différent de véhicules, qui peut être supérieur ou égal à 2. De plus, la mission attribuée à la matrice peut être différente d'une mission de surveillance, et peut par exemple être une mission de collecte de données de pollution.

Chaque drone de la matrice se déplace suivant une trajectoire, au-dessus de la zone à surveiller 402. Les stations de clonages 300₁-300₃ sont distribuées dans, ou près de, la zone à surveiller 404 le long des trajectoires de déplacement des drones de la matrice.

Tel que montré en FIGURE 4a, en début de mission, la matrice 402 est composée des drones 200₁-200₂.

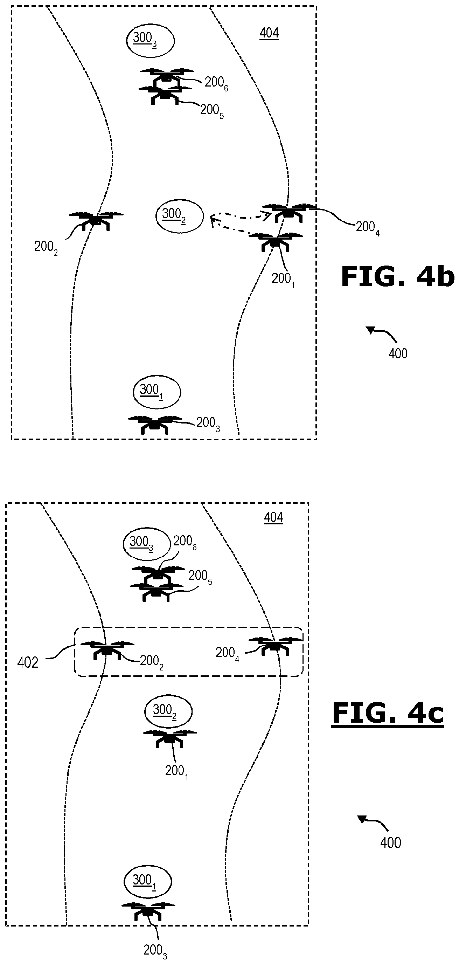

Puis pendant la mission, l'autonomie d'un des drones, à savoir le drone 200₁, diminue en dessous du seuil de clonage. Celui-ci émet alors une requête de clonage à destination de la station de clonage 300₂ qui est la prochaine station de clonage sur sa trajectoire. Lorsque le drone 200₁ arrive à hauteur de la station de clonage 300₂, il est remplacé par un drone 200₄, identique ou similaire au drone 200₁, et se trouvant à la station de clonage, tel que montré sur la FIGURE 4b.

Le drone 200₄ prend la place du drone 200₁ dans la matrice 402 de sorte que ladite matrice 402 est composée des drones 200₂ et 200₄. La mission se poursuit avec la nouvelle composition de la matrice 402, tel que montré sur la FIGURE 4c.

Ainsi, le système 400 permet de remplacer un drone dont l'autonomie devient faible par un autre drone, toute en assurant la continuité de la mission de la matrice de drones.

Bien entendu, l'invention n'est pas limitée aux exemples détaillés ci-dessus donnés à titre d'illustration et la portée générale de l'invention est définie dans les revendications.

## Revendications

1. Procédé (100) de gestion d'autonomie d'une matrice (402) de plusieurs véhicules au sein d'une flotte de véhicules (200₁-200₆), chacun alimenté par au moins une batterie embarquée (202), lors de la réalisation d'une mission par ladite matrice, ledit procédé (100) comprenant les étapes suivantes réalisées pour chaque véhicule (202₂) de ladite matrice participant à ladite mission :
- surveillance (102,104) de l'autonomie dudit véhicule (202₁), et
- lorsque l'autonomie dudit véhicule (202₁) atteint un seuil, dit de clonage, clonage (106) dudit véhicule (202₁) par un autre véhicule (202₃), dit véhicule clone, parmi les autres véhicules de ladite flotte, au niveau d'une station (300₂), dite de clonage
le procédé étant **caractérisé par le fait que**, lors de l'étape de clonage (106) d'un véhicule à cloner (200₁), la mission du véhicule à cloner (200₁) est partiellement ou totalement reprise par un autre véhicule de la matrice (402), le véhicule clone (200₃) quittant la station de clonage (300₂) après que, ou au moment où, le véhicule à cloner (200₁) arrive à ladite station de clonage (300₂).

2. Procédé (100) selon la revendication précédente, **caractérisé en ce que**, pour au moins un véhicule de la matrice (402), le seuil de clonage est déterminé en fonction d'au moins un des paramètres suivants :
- d'une trajectoire dudit véhicule à cloner,
- d'une donnée de localisation dudit véhicule à cloner, et
- d'une donnée de localisation des stations de clonage ;
de sorte que ledit seuil de clonage est au moins égale à la distance entre la position actuelle dudit véhicule et la plus proche station de clonage.

3. Procédé (100) selon l'une quelconque des revendications précédentes, **caractérisé en ce que**, pour au moins un véhicule de la matrice (402), le seuil de clonage est fixe.

4. Procédé (100) selon l'une quelconque des revendications précédentes, **caractérisé en ce que**, l'étape de clonage (106) comprend une étape (112) de détermination d'un véhicule clone, parmi au moins un véhicule présent au niveau de la station de clonage (300₁-300₃), en fonction d'au moins des paramètres suivants :
- un niveau d'autonomie de chaque véhicule présent au niveau de ladite station de clonage (300₁-300₃),
- un type de chaque véhicule présent au niveau de ladite station de clonage (300₁-300₃),
- un équipement de chaque véhicule présent au niveau de ladite station de clonage (300₁-300₃).

5. Procédé (100) selon l'une quelconque des revendications précédentes, **caractérisé en ce qu'**il comprend une étape (118) de recharge du véhicule cloné (200₁) au niveau de la station de clonage (300₂).

6. Système (400) comprenant :
- une flotte de véhicules (200₁-200₆), chacun alimenté par batterie électrique embarquée (202), et configurés pour réaliser au moins une mission sous forme d'au moins une matrice (402) comprenant plusieurs véhicules de ladite flotte ; et
- au moins une station de clonage (300₁-300₃) ;
configurés pour mettre en oeuvre le procédé (100) selon l'une quelconque des revendications précédentes.

7. Système (400) selon la revendication précédente, **caractérisé en ce qu'**au moins une station de clonage (300₁-300₃) comprend une borne de recharge (302) d'un véhicule cloné.

## Patentansprüche

1. Verfahren (100) zum Verwalten einer Autonomie einer Matrix (402) mehrerer Fahrzeuge innerhalb einer Flotte von Fahrzeugen (200₁-200₆), wobei jedes durch mindestens eine integrierte Batterie (202) gespeist wird, während der Ausführung einer Aufgabe durch die Matrix, das Verfahren (100) umfassend die folgenden Schritte, die für jedes Fahrzeug (202₂) der Matrix, das an der Aufgabe teilnimmt, ausgeführt werden:
- Überwachen (102,104) der Autonomie des Fahrzeugs (202₁), und
- wenn die Autonomie des Fahrzeugs (202₁) eine Schwelle erreicht, die als Klonschwelle bezeichnet wird, Klonen (106) des Fahrzeugs (202₁) durch ein anderes Fahrzeug (202₃), das als Klonfahrzeug bezeichnet wird, unter den anderen Fahrzeugen der Flotte, an einer Station (300₂), die als Klonstation bezeichnet wird, wobei das Verfahren **dadurch gekennzeichnet ist, dass,**
während des Klonschritts (106) eines zu klonenden Fahrzeugs (200₁), die Aufgabe des zu klonenden Fahrzeugs (200₁) teilweise oder vollständig durch ein anderes Fahrzeug der Matrix (402) übernommen wird, wobei das Klonfahrzeug (200₃) die Klonstation (300₂) nach oder zu dem Zeitpunkt verlässt, zu dem das zu klonende Fahrzeug (200₁) an der Klonstation (300₂) ankommt.

2. Verfahren (100) nach dem vorstehenden Anspruch,
**dadurch gekennzeichnet, dass** für mindestens ein Fahrzeug der Matrix (402) die Klonschwelle in Abhängigkeit von mindestens einem der folgenden Parameter bestimmt wird:
- einem Kurs des zu klonenden Fahrzeugs,
- Standortdaten des zu klonenden Fahrzeugs und
- Standortdaten der Klonstationen;
sodass die Klonschwelle mindestens gleich dem Abstand zwischen der aktuellen Position des Fahrzeugs und der nächstgelegenen Klonstation ist.

3. Verfahren (100) nach einem der vorstehenden Ansprüche,
**dadurch gekennzeichnet, dass** für mindestens ein Fahrzeug der Matrix (402) die Klonschwelle festgelegt ist.

4. Verfahren (100) nach einem der vorstehenden Ansprüche,
**dadurch gekennzeichnet, dass** der Klonschritt (106) einen Schritt (112) zum Bestimmen eines Klonfahrzeugs unter mindestens einem Fahrzeug, das an der Klonstation (300₁-300₃) vorhanden ist, in Abhängigkeit von mindestens den folgenden Parametern, umfasst:
- einem Autonomiegrad jedes Fahrzeugs, das an der Klonstation (300₁-300₃) vorhanden ist,
- einem Typ jedes Fahrzeugs, das an der Klonstation (300₁-300₃) vorhanden ist,
- einer Ausrüstung jedes Fahrzeugs, das an der Klonstation (300₁-300₃) vorhanden ist.

5. Verfahren (100) nach einem der vorstehenden Ansprüche,
**dadurch gekennzeichnet, dass** es einen Schritt (118) zum Wiederaufladen des geklonten Fahrzeugs (200₁) an der Klonstation (300₂) umfasst.

6. System (400), umfassend:
- eine Flotte von Fahrzeugen (200₁-200₆), wobei jedes durch eine elektrische integrierte Batterie (202) gespeist wird, und die zum Ausführen mindestens einer Aufgabe in Form mindestens einer Matrix (402), umfassend mehrere Fahrzeuge der Flotte, konfiguriert sind; und
- mindestens eine Klonstation (300₁-300₃);
das zum Durchführen des Verfahrens (100) nach einem der vorstehenden Ansprüche konfiguriert ist.

7. System (400) nach dem vorstehenden Anspruch,
**dadurch gekennzeichnet, dass** mindestens eine Klonstation (300₁-300₃) einen Ladepunkt (302) eines geklonten Fahrzeugs umfasst.

## Claims

1. Method (100) for managing the autonomy of an array (402) of a plurality of vehicles within a fleet of vehicles (200₁-200₆), each powered by at least one on-board battery (202), when a mission is carried out by said array, said method (100) comprising the following steps carried out for each vehicle (202₂) of said array participating in said mission:
- monitoring (102,104) the autonomy of said vehicle (202₁), and
- when the autonomy of said vehicle (202₁) reaches a threshold, referred to as a cloning threshold, cloning (106) of said vehicle (202₁) by another vehicle (202₃), referred to as a clone vehicle, from among the other vehicles of said fleet at a station (300₂), referred to as a cloning station,
the method being **characterized in that**,
during the step of cloning (106) a vehicle to be cloned (200₁), the mission of the vehicle to be cloned (200₁) is partially or totally taken over by another vehicle of the array (402), the clone vehicle (200₃) leaving the cloning station (300₂) after, or at the moment when, the vehicle to be cloned (200₁) arrives at said cloning station (300₂).

2. The method (100) according to the preceding claim, **characterized in that**, for at least one vehicle of the array (402), the cloning threshold is determined on the basis of at least one of the following parameters:
- a trajectory for said vehicle to be cloned,
- location data for said vehicle to be cloned, and
- location data for the cloning stations;
such that said cloning threshold is at least equal to the distance between the current position of said vehicle and the nearest cloning station.

3. The method (100) according to any one of the preceding claims, **characterized in that**, for at least one vehicle of the array (402), the cloning threshold is fixed.

4. The method (100) according to any one of the preceding claims, **characterized in that** the cloning step (106) comprises a step (112) of determining a clone vehicle, from among at least one vehicle present at the cloning station (300₁-300₃), on the basis of at least the following parameters:
- a level of autonomy of each vehicle present at said cloning station (300₁-300₃),
- a type of each vehicle present at said cloning station (300₁-300₃),
- equipment of each vehicle present at said cloning station (300₁-300₃).

5. The method (100) according to any one of the preceding claims, **characterized in that** it comprises a step (118) of recharging the cloned vehicle (200₁) at the cloning station (300₂).

6. A system (400) comprising:
- a fleet of vehicles (200₁-200₆), each powered by an on-board electric battery (202), and configured to carry out at least one mission in the form of at least one array (402) comprising a plurality of vehicles from said fleet; and
- at least one cloning station (300₁-300₃);
configured to implement the method (100) according to any one of the preceding claims.

7. The system (400) according to the preceding claim, **characterized in that** at least one cloning station (300₁-300₃) comprises a charging station (302) for charging a cloned vehicle.
